# DEMANDE DE BREVET EUROPEEN

(11) **EP 0 719 808 A1**
(43) Date de publication de la demande: **03.07.1996**
(21) Numéro de dépôt: 95402397.4
(22) Date de dépôt: 26.10.1995
(51) Int. Cl.: C08G 18/42

(54) **Procédé de préparation de mousses souples de polyester-polyuréthanne ne donnant pas lieu à la formation de brouillard et utilisation desdites mousses**

(30) Priorité: 28.12.1994 FR 9415776
(71) Demandeur: WITCO, F-75008 Paris (FR)
(72) Inventeur: Loy, Jean-Philippe, F-27520 Bourgtheroulde-Infreville (FR); Ghesquiere, Denis, F-27370 Tourville la Campagne (FR); Fiquet, Line, F-76100 Rouen (FR)
(74) Mandataire: Peuscet, Jacques

(57) **Abrégé**

Procédé de préparation de mousses souples de polyester-polyuréthanne ne donnant pas lieu à la formation de brouillard, dans lequel on fait réagir au moins un polyisocyanate avec au moins un polyester prétraité par distillation et de l'eau et/ou des composés organiques très volatils comme agent d'expansion, caractérisé par le fait que, pour obtenir le polyester prétraité mis en réaction avec le polyisocyanate, dans une première étape, on fabrique un polyester de départ ayant un indice d'hydroxyle (IOH) supérieur de 4 à 12 mg KOH/g par rapport à l'IOH du polyester prétraité désiré et ayant une viscosité mesurée à 25°C au viscosimètre Brookfield RVT inférieure de 2 à 5 Pa.s par rapport à celle du polyester prétraité désiré, et dans une seconde étape, on soumet ledit polyester de départ à une distillation, pendant un temps de traitement compris entre 2 et 300 secondes, dans des conditions de température et de pression permettant l'extraction d'au moins 85 % du diester cyclique contenu dans le polyester de départ.

## Description

La présente invention concerne un procédé de préparation de mousses souples de polyester-polyuréthanne ne donnant pas lieu à la formation de brouillard ou "fogging" et leur utilisation dans les moyens de transport, de préférence les automobiles.

Il est connu d'utiliser dans l'industrie des moyens de transport, en particulier dans l'industrie automobile, des mousses de polyuréthanne de type polyester-polyuréthanne, qui sont obtenues par réaction d'un polyisocyanate avec un polyester comportant au moins deux groupes hydroxylés en présence d'un agent d'expansion.

Dans l'industrie des moyens de transport, ces mousses sont généralement utilisées à l'intérieur des véhicules, en particulier sous forme laminée en contre-collage par flammage sur les tissus de garnissages, pour éviter leur froissage ; elles peuvent aussi servir pour réaliser certaines pièces massives, telles que des accoudoirs, appui-tête, pare-soleil. Les propriétés mécaniques et adhésives particulières de ce type de mousse ne se retrouvent pas pour un autre type de mousses couramment utilisé : les mousses polyéther-polyuréthanne, ce qui rend leur utilisation préférable. Or, il est connu que les mousses polyester-polyuréthanne génèrent un phénomène de formation de brouillard sur les pare-brises, généralement appelé "fogging". Ce phénomène est, par exemple, décrit par W. Behrens, T. Lampe et P. Schwarz dans Automobiltechnische Zeitschrift 93, 1991, No. 7/8, pages 384 à 389 (partie 1) et 1991, No. 11 (partie 2) : il provient de l'évaporation de produits volatils, qui se trouvent dans la mousse et viennent se condenser sur la paroi froide que constitue le pare-brise. Il se forme ainsi un dépôt qui diffuse la lumière et qui est gênant pour le conducteur, en particulier dans de mauvaises conditions d'éclairage.

Il est également connu par l'article de J. Soler et col. Polyurethanes World Congress 1993, pages 552-557 que le "fogging" dans les mousses de polyester-polyuréthanne est essentiellement dû à la présence de lactones qui sont déjà présentes dans le polyester-polyol ; ces lactones ne réagissent pas avec l'isocyanate et restent donc telles quelles dans la mousse.

Dans le cas où le polyester utilisé est un poly(adipate de diéthylèneglycol), la lactone responsable du "fogging" est le 1,4,7 trioxacyclotridécane-8,13-dione, qui est un diester cyclique de formule I :

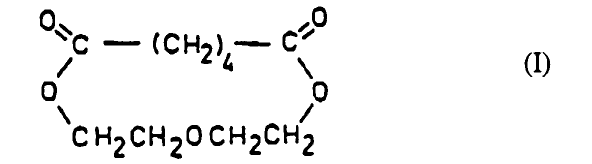

Le poly(adipate de diéthylèneglycol), utilisé de façon classique pour la fabrication de mousses et fabriqué par la technique de polycondensation en masse en atmosphère inerte en présence d'un polyol ayant une fonctionnalité supérieure à 2, tel que le triméthylol propane, comme agent de ramification, contient de l'ordre de 0,9 à 1,2 % en poids du diester cyclique de formule I. Des esters cycliques de degré de polymérisation supérieur sont également présents, mais à des doses très inférieures, et ils ne contribuent pratiquement pas à la formation du "fogging" car ils ont une masse moléculaire importante. Lorsque l'on teste une mousse de polyuréthanne selon la norme DIN 75 201 B, on considère que le phénomène de "fogging" a disparu si la mesure obtenue est inférieure à 0,2 mg.

On a donc cherché à éliminer les lactones responsables du phénomène de "fogging", avant la réaction des polyesters avec les polyisocyanates. On a pensé à utiliser la distillation car les diesters cycliques sont plus volatils que les polyesters linéaires. Mais il se pose cependant un problème car les diesters cycliques et les oligoesters sont en équilibre thermodynamique. Par conséquent, au fur et à mesure que l'on élimine les diesters cycliques du mélange, ceux-ci ont tendance à se reformer à partir des oligoesters pour rétablir l'équilibre (voir, à cet égard, A. A. Guryliva et al., Polymer Science USSR, 1979, Volume 21 n° 7, pages 1745 à 1753) ; il est d'ailleurs connu que, par distillation de polyesters linéaires, à haute température sous pression réduite, on peut obtenir des esters cycliques avec un rendement élevé (Spanagel et Carothers, J. Am. Chem. Soc., 1935, 57, pages 929-34 ). Il est donc nécessaire, pour éviter un déplacement de l'équilibre vers les diesters cycliques, de limiter le temps de séjour à température élevée afin d'éviter la reformation des lactones après leur élimination. Dans ce but, il est connu d'utiliser une évaporation en couche mince ou en film ou une distillation flash ; ce type de distillation est bien connu dans l'industrie des polymères : par exemple, dans J. Polymer Sci. Reviews, 1977, Vol 12, pages 79 à 105, on décrit l'élimination sous vide, dans un évaporateur à film, d'oligomères cycliques dans une masse fondue de nylon-6 obtenue par polymérisation de caprolactames et, dans Ind. Eng. Chem. Fundam, 1980, 19, pages 415-420, on décrit l'utilisation d'un évaporateur à film balayé pour l'élimination des volatils dans les polymères.

Par ailleurs, EP-A-579 988 décrit un procédé dans lequel on diminue le "fogging" d'une mousse de polyester-polyuréthanne en soumettant, avant son utilisation pour la production de mousse, le polyester à une distillation avec un temps de séjour moyen compris entre 2 et 600 s., à une température comprise entre 160 et 250°C sous une pression de 0,05 à 10 mbars. Selon ce procédé, on traite par distillation un polyester classique disponible dans le commerce tel que le "Desmophen 2200®" commercialisé par la société "Bayer AG" et, pour obtenir la faible durée de distillation revendiquée, on utilise un évaporateur à chute de film, un évaporateur à couche mince ou un évaporateur flash.

Le procédé décrit dans EP-A-579 988, s'il permet d'éliminer une partie des agents responsables du "fogging" provenant du polyester, présente cependant l'inconvénient de n'en permettre qu'une élimination très incomplète ; et cette élimination ne peut être plus complète car une extraction plus poussée nécessiterait l'utilisation de températures plus élevées ou de temps de séjour plus longs et conduirait à un polyester dont les propriétés physico-chimiques ne seraient plus celles requises pour la production des mousses de polyuréthanne désirées dans les conditions habituelles.

Dans les procédés de fabrication de mousses de polyesterpolyuréthanne pratiqués à ce jour, on utilise généralement des polyesters ayant une masse moléculaire comprise entre 400 et 6 000, de préférence entre 1 000 et 4 000, de plus grande préférence entre 2 200 et 2 800, et ayant un indice d'hydroxyle (IOH) compris entre 40 ± 2 et 70 ± 2 mg KOH/g et une viscosité comprise entre 10 et 30 Pa.s, de préférence entre 15 et 25 Pa.s, mesurée à 25°C à l'aide d'un viscosimètre Brookfield RVT. Ces polyesters contiennent par molécule au moins 2 groupes OH, de préférence 2 à 4 groupes OH.

Selon la présente invention, on a trouvé un procédé de prétraitement des polyesters qui permet de remédier à l'inconvénient décrit ci-dessus du procédé défini dans EP-A-579 988 et permet d'atteindre des mesures de "fogging" selon la norme DIN 75 201 B très nettement inférieures, de l'ordre de 0,1 mg.

La présente invention a donc pour objet un procédé de préparation de mousses souples de polyester-polyuréthanne ne donnant pas lieu à la formation de brouillard ou "fogging" ayant pour origine le polyester, dans lequel on fait réagir :
a) au moins un polyisocyanate avec
b) au moins un polyester prétraité par distillation avec un faible temps de séjour, ce polyester comportant au moins deux groupes hydroxyle par molécule et ayant une masse moléculaire comprise entre 400 et 10 000,
c) de l'eau et/ou des composés organiques très volatils comme agent d'expansion,
   éventuellement en présence d'un ou plusieurs composé(s) présentant au moins deux atomes d'hydrogène actif, ayant des masses moléculaires comprises entre 32 et 400, comme agent(s) de prolongation de chaînes et de réticulation et, éventuellement, en présence d'au moins un additif connu en soi,
   caractérisé par le fait que, pour obtenir le polyester prétraité mis en réaction avec le polyisocyanate, dans une première étape, on fabrique un polyester de départ ayant un indice d'hydroxyle (IOH) supérieur de 4 à 12 mg KOH/g par rapport à l'IOH du polyester prétraité désiré et ayant une viscosité mesurée à 25°C au viscosimètre Brookfield RVT inférieure de 2 à 5 Pa.s par rapport à celle du polyester prétraité désiré, et dans une seconde étape, on soumet ledit polyester de départ à une distillation, pendant un temps de traitement compris entre 2 et 300 secondes, dans des conditions de température et de pression permettant l'extraction d'au moins 85 % du diester cyclique contenu dans le polyester de départ.

La distillation de la deuxième étape, compte-tenu des matériels industriels disponibles à ce jour, peut avantageusement être effectuée :
- soit sous une pression comprise entre 0,1 et 5 Pascals à une température comprise entre 100 et 130°C (distillation moléculaire) ;
- soit sous une pression comprise entre 50 et 200 Pascals à une température comprise entre 250 et 310°C (évaporateur à film mince).

Selon la présente invention, on a donc trouvé qu'en modifiant les caractéristiques physico-chimiques du polyester soumis à distillation sans modifier sa nature chimique, il était possible d'obtenir, après distillation, d'une part, un polyester, dont les produits volatils générateurs de brouillard ou "fogging" ont été pratiquement totalement éliminés, et d'autre part, un polyester ayant les qualités requises pour fabriquer une mousse de polyester-polyuréthanne sans avoir à modifier les conditions standard des procédés classiques de fabrication de mousse.

Le polyester de départ est, de préférence, un poly(adipate de diéthylèneglycol) comportant, de préférence, un agent de ramification tel que le triméthylolpropane, le glycérol ou le pentaérythritol. On a constaté que, dans ce cas, on peut obtenir un polyester prétraité contenant moins de 0,1 % en poids de diester cyclique de formule I. Il faut noter que, dans le poly(adipate de diéthylèneglycol) prétraité par distillation selon l'invention, la majeure partie du diéthylèneglycol libre initialement contenu dans le polyester de départ est également éliminée car le diéthylèneglycol distille avant le diester de formule I. Cette élimination ne présente pas d'inconvénient majeur ; le diéthylèneglycol peut d'ailleurs, éventuellement, être réintroduit, en tout ou partie.

Le polyester de départ est avantageusement préparé, de façon classique, par polycondensation en masse d'au moins un diacide et d'au moins un diol, éventuellement associé à une petite quantité de polyol, à une température comprise entre 160 et 250°C de préférence sous un courant de gaz inerte, en particulier l'azote, en présence d'un catalyseur métallique ou organométallique approprié. L'homme de métier, à qui l'on définit la matière première et les caractéristiques physiques du polyester à obtenir, sait déterminer les paramètres spécifiques d'une telle fabrication.

La distillation appliquée au polyester de départ peut être une évaporation sur film mince par la technique de la distillation moléculaire. Dans ce procédé, on peut utiliser un appareil constitué d'une enceinte dans laquelle le vide est fait par un système permettant d'atteindre des pressions de 0,1 Pascal. Le produit à traiter est envoyé en continu sur le centre d'un plateau situé dans cette enceinte. Ce plateau tourne à grande vitesse ; la force centrifuge appliquée au produit crée un film. La face inférieure du plateau est chauffée soit par des résistances électriques soit par induction. L'action du vide et de la puissance thermique transmise au film induisent une évaporation. Les entités éliminées sont condensées sur le dôme de l'enceinte et sont récupérées dans un réceptacle maintenu en température si besoin est. Le produit débarassé de ses volatils quitte le plateau pour être recueilli. Dans le cas particulier, le polyester est pré-dégazé à 70-80°C sous 50 Pascals pour pouvoir atteindre un vide suffisant dans l'enceinte du distillateur moléculaire. La résine est ensuite injectée au centre d'un plateau de 38 cm de diamètre tournant à 1 500 tours/min. La distillation se fait sous une pression comprise entre 0,1 et 5 Pascals, à une température comprise entre 100 et 130°C.

La distillation peut également être effectuée dans un évaporateur à couche mince balayée. De façon connue, un évaporateur de ce type se compose essentiellement d'une partie cylindrique chauffée par une double enveloppe, d'une partie supérieure servant à la séparation des volatils et d'un rotor tournant à grande vitesse. Le produit à traiter est introduit à la partie supérieure de la double enveloppe et il est réparti également sur la surface de chauffe par un anneau de distribution ; il est repris par les pales du rotor et étalé instantanément sur toute la paroi sous forme d'un film à grande turbulence. Le produit descend vers la base de l'évaporateur en suivant un mouvement hélicoïdal le long de la paroi interne. Les produits volatils, qui se dégagent, remontent à contre-courant et traversent un séparateur en tête de l'évaporateur. Dans ce cas, la distillation est effectuée à une température comprise entre 250 et 310°C, sous une pression comprise entre 20 et 300 Pascals.

A sa sortie de l'appareil de distillation, le polyester prétraité est rapidement refroidi à une température inférieure ou égale à 130°C.

La mousse peut être préparée par tout procédé classique, connu de l'homme de métier, par réaction d'un oligoisocyanate et du polyester prétraité, seul ou en mélange avec d'autres agents réactifs usuels tels que des polycaprolactones et des polyamides, en présence d'un catalyseur et d'un agent d'expansion et, éventuellement, en présence d'un agent de réticulation ou un allongeur de chaîne et/ou d'autres additifs connus.

Le polyisocyanate utilisé peut être un isocyanate aromatique, aliphatique, cycloaliphatique ou hétérocyclique. On préfère généralement les polyisocyanates aisément accessibles techniquement tels que les 2,4 et 2,6-toluylène diisocyanates (TDI) ainsi que leurs mélanges, les diphénylméthanediisocyanates (MDI) ou les prépolymères résultant de la réaction partielle des polyisocyanates avec un composé hydroxylé, tels que ceux décrits dans J. H. Saunders, K. C. Frisch, High Polymers, 1964, Vol. 26, ouvrage "Polyurethanes Chemistry and Technology", édité par "Interscience Publishers".

On peut ajouter au mélange réactionnel des agents de réticulation ou de prolongation de chaîne comportant au moins deux atomes d'hydrogène susceptibles de réagir avec les isocyanates et ayant une masse moléculaire inférieure à 500. Ces agents de réticulation sont, par exemple, des composés comportant des groupes hydroxyle et/ou amino et/ou carboxyle.

Comme agent d'expansion, on peut utiliser l'eau éventuellement mélangée à un agent tensioactif et/ou des composés organiques à bas point de fusion.

La préparation des mousses de polyuréthanne est décrit en détail dans G. Woods, 1982, "Flexible Polyurethane Foams : Chemistry and Technology", édité par "Applied Science Publishers".

D'autres additifs peuvent également être introduits de façon connue, tels que des agents émulsionnants, des agents de stabilisation des mousses ou des agents ignifugeants, des pigments, des colorants ou des charges, des stabilisants contre le vieillissement ou des substances ayant une action fongistatique et bactériostatique. On choisira, de préférence, parmi les composés ceux ne donnant pas lieu par eux-mêmes à la formation de "fogging".

La présente invention a également pour objet l'utilisation des mousses souples de polyester-polyuréthanne ne produisant pas de "fogging", susceptibles d'être obtenues par le procédé selon l'invention, dans les moyens de transport, en particulier les intérieurs de véhicules.

Les exemples donnés ci-après, à titre illustratif et non limitatif, permettront de mieux comprendre l'invention.

### EXEMPLES 1 et 2

### I - Préparation du polyester de départ

### A) Préparation d'un premier polyester de départ (PDIA) (exemple 1)

Dans un réacteur d'estérification muni d'une colonne de fractionnement, on charge successivement du diéthylèneglycol, du triméthylol propane et de l'acide adipique dans les proportions suivantes pour 100 kg de polyester :
- diéthylène glycol (DEG) 47,74 kg
- triméthylol propane (TMP) 4,06 kg
- acide adipique 63,91 kg

On chauffe sous atmosphère d'azote et on agite dès que possible. Un palier de température est effectué vers 140-150°C afin de distiller la majeure partie de l'eau générée en limitant l'entraînement des monomères.

On introduit 4 g du catalyseur "Fomrez SUL 11A" de la société WITCO et on chauffe progressivement jusqu'à une température de 220 à 230°C.

Les indices d'acide (IA) et d'hydroxyle (IOH) sont mesurés régulièrement pour rajouter éventuellement des monomères pour compenser les pertes par entraînement.

La réaction est poursuivie jusqu'à obtention d'un indice d'acide (IA) inférieur à 1,5 mg KOH/g et d'un indice d'hydroxyle (IOH) prédéterminé de 65 à 70 mg KOH/g.

Le temps total de réaction est d'environ 22 heures. Le débit d'azote est augmenté en fonction de l'avancement de la réaction jusqu'à atteindre pour finir 0,8 m³/h.

Les caractéristiques du polyester PDIA obtenu sont données dans le tableau 1 ci-après.

### B) Préparation d'un second polyester de départ (PDIB) (exemple 2)

On opère comme pour le premier polyester de départ sauf que l'on cherche à obtenir un indice d'hydroxyle (IOH) compris entre 57-62 mg KOH/g.

On a fait réagir pour 100 kg de polyester les composés suivants :
- diéthylèneglycol (DEG) 48,71 kg
- triméthylol propane (TMP) 2,83 kg
- acide adipique 64,25 kg
- catalyseur (le même que pour PDIA) 4 g

Les caractéristiques du polyester PDIB obtenu sont également données dans le tableau 1 ci-après.

**TABLEAU 1**

| | PDIA | PDIB |
|---|---|---|
| Fonctionnalité | 2,62 | 2,45 |
| Masse moléculaire en nombre | 2 200 | 2 350 |
| TMP/DEG molaire | 6,3/93,7 | 4,4/95,6 |
| IOH (mgKOH/g) * | 67,5 | 59,0 |
| IA (mgKOH/g) | 1,2 | 1,1 |
| Viscosité à 25°C (mPa.s)** | 15 600 | 16 800 |
| Ester cyclique de formule (I) (%) | 1 | 0,95 |
| DEG libre (%) | 0,55 | 0,45 |
| TMP = triméthylol propane | | |
| DEG = diéthylène glycol | | |
| IA = indice d'acide | | |
| IOH = indice d'hydroxyle | | |
| * mesuré selon la norme NF 73272 | | |
| ** mesurée au viscosimètre Brookfield RVT à 25°C | | |

### II - Distillation du polyester de départ

On utilise un évaporateur à couche mince de marque LUWA® avant les caractéristiques suivantes :

| | |
|---|---|
| Surface d'échange | 0,125 m² |
| Température maximale de travail | 300-350°C |
| Pression minimale de travail | 10 Pascals |
| Vitesse périphérique en bout de pales du rotor | 8-9 m/s |

On préchauffe respectivement les polyesters PDIA ou PDIB à 80°C avant de les envoyer, avec un débit de 30 kg/h, en tête d'évaporateur par l'intermédiaire d'une pompe volumétrique, la tuyauterie au refoulement de la pompe étant chauffée entre 130 et 140°C par une vapeur d'eau détendue. La pression dans l'évaporateur est maintenue à une valeur de (150 ± 50) Pa à l'aide d'une pompe à vide. La paroi de l'évaporateur est maintenue à une température de 275°C ± 5°C par circulation d'un fluide caloporteur, dont la température est d'environ 290°C. Les composés volatils passent dans un condenseur maintenu à une température supérieure à 80°C pour éviter que le condenseur ne se bouche à cause de la cristallisation des composés volatils, en particulier du diester cyclique de formule (I).

Les polyesters prétraités (PCIIA et PCIIB obtenus respectivement à partir des polyesters de départ PDIA et PDIB) sortent à la base de l'évaporateur à une température proche de celle des parois de l'évaporateur. Ils sont refroidis immédiatement à une température de 100°C.

Les caractéristiques des polyesters prétraités obtenus sont données dans le tableau 2 ci-après :

**TABLEAU 2**

| | PCIIA (exemple 1) | PCIIB (exemple 2) |
|---|---|---|
| IOH (mgKOH/g)* | 60,2 | 50,5 |
| IA (mgKOH/g) | 1,3 | 1,1 |
| Viscosité à 25°C (mPa.s)** | 19 500 | 20 400 |
| Ester cyclique de formule I (%) | 0,07 | 0,1 |
| DEG libre (%) | Traces | Traces |
| IOH = indice d'hydroxyle | | |
| IA = indice d'acide | | |
| DEG = diéthylèneglycol | | |
| * mesuré selon la norme NF 73272 | | |
| ** mesurée au viscosimètre Brookfield RVT à 25°C | | |

### III - Préparation de la mousse avec le polyester prétraité selon II

Les essais ont été effectués, selon le procédé connu en un seul stade ("one-shot"), à l'aide d'une machine de laboratoire haute pression. La tête de mélange a de multiples entrées permettant d'introduire les différents composants d'une manière contrôlée.

Dans cet exemple, 4 circuits d'entrée ont été utilisés :
- 1 pour le polyester PCIIA ou PCIIB préparé selon II de cet exemple ;
- 1 pour du toluylène-diisocyanate TDI (72/28) obtenu par mélange 50/50 de TDI 80/20 et de TDI 65/35 (les deux nombres indiquent la proportion d'isomères TDI 2,4 et TDI 2,6) ;
- 1 pour le catalyseur : N-benzyl N,N-diméthylamine ;
- 1 pour un mélange (eau + tensioactif "Fomrez M 6682 A" produit par la société "WITCO").

On a alimenté la tête de mélange en respectant les proportions suivantes :
- polyester 100
- eau 3,8
- Tensioactif 1,3
- Catalyseur 1,3
- Isocyanate qsp index 100

L'index 100 de l'isocyanate correspond à la quantité stoechiométrique suffisante pour réagir avec tous les autres composants réactifs vis-à-vis des isocyanates.

Avec les deux polyesters prétraités PCIIA et PCIIB (exemples 1 et 2 respectivement), on obtient une mousse polyuréthanne souple de densité 30 kg/m³.

Les propriétés de ces mousses sont données dans le tableau 3 ci-après, dans lequel sont indiquées les normes utilisées pour les mesures :

**TABLEAU 3**

| | Exemple 1 | Exemple 2 | Norme utilisée |
|---|---|---|---|
| Densité (kg/m³) | 30 | 30 | ASTM D 3574-91, test A |
| IFD (1) en N à 25 % | 270 | | ASTM D 3574-91, test B1 |
| à 50 % | 360 | | ASTM D 3574-91, test B1 |
| à 65 % | 460 | | ASTM D 3574-91, test B1 |
| Charge à la rupture (kPa) | 120 | | ASTM D 3574-91, test E |
| Allongement à la rupture (%) | 200 | | ASTM D 3574-91, test E |
| Résistance à la déchirure (N/m) | 400 | | ASTM D 3574-91, test F |
| Déformation rémanente à la compression (%) | 14 | | ASTM D 3574-91, test D |
| Perméabilité (dm³/s) | 0,21 | | ASTM D 3574-91, test G |
| Nombre de cellules par cm linéaire | 16 | | |
| Fogging (mg) | < 0,1 | 0,1 | DIN 75 201 B |
| (1) IFD = Force de compression d'un disque de 323 cm² dans un bloc de mousse de 10 cm d'épaisseur à différents degrés de compression. | | | |

### EXEMPLE 3 COMPARATIF

A titre de comparaison, on a préparé des mousses par le même procédé que celui décrit dans l'exemple 1 à l'aide d'un polyester standard : le "Fomrez® 60E" commercialisé par la société "WITCO", qui a les caractéristiques données dans le tableau 4 ci-après. Le processus de fabrication a été identique à celui donné ci-dessus à cette différence près que l'on a remplacé le PCIIA et PCIIB par le "Fomrez 60E"

Le "fogging" mesuré par la norme DIN 75 201 B sur la mousse obtenue était de 6,5 mg.

**TABLEAU 4**

| | FOMREZ 60 E |
|---|---|
| Fonctionnalité | 2,67 |
| Masse moléculaire en nombre | 2 550 |
| TMP/DEG (en moles) | 6,1/93,9 |
| IOH (mg KOH/g) | 59,4 |
| IA (mg KOH/g) | 1,35 |
| Viscosité à 25°C, (mPa.s) | 21 000 |
| Ester cyclique de formule I (%) | 0,95 |
| DEG libre (%) | 0,5 |

## Revendications

1. Procédé de préparation de mousses souples de polyester-polyuréthanne ne donnant pas lieu à la formation de brouillard, dans lequel on fait réagir :
a) au moins un polyisocyanate avec
b) au moins un polyester prétraité par distillation avec un faible temps de séjour, ce polyester comportant au moins deux groupes hydroxyle par molécule et ayant une masse moléculaire comprise entre 400 et 10 000,
c) de l'eau et/ou des composés organiques très volatils comme agent d'expansion,
éventuellement en présence d'un ou plusieurs composé(s) présentant au moins deux atomes d'hydrogène actif, ayant des masses moléculaires comprises entre 32 et 400, comme agent(s) de prolongation de chaînes et de réticulation et, éventuellement, en présence d'au moins un additif connu en soi,
caractérisé par le fait que, pour obtenir le polyester prétraité mis en réaction avec le polyisocyanate, dans une première étape, on fabrique un polyester de départ ayant un indice d'hydroxyle (IOH) supérieur de 4 à 12 mg KOH/g par rapport à l'IOH du polyester prétraité désiré et ayant une viscosité mesurée à 25°C au viscosimètre Brookfield RVT inférieure de 2 à 5 Pa.s par rapport à celle du polyester prétraité désiré, et dans une seconde étape, on soumet ledit polyester de départ à une distillation, pendant un temps de traitement compris entre 2 et 300 secondes, dans des conditions de température et de pression permettant l'extraction d'au moins 85 % du diester cyclique contenu dans le polyester de départ.

2. Procédé selon la revendication 1, caractérisé par le fait que la distillation de la seconde étape est effectuée sous une pression comprise entre 0,1 et 5 Pascals à une température comprise entre 100 et 130°C par distillation moléculaire.

3. Procédé selon la revendication 1, caractérisé par le fait que la distillation de la seconde étape est effectuée sous une pression comprise entre 50 et 200 Pascals à une température comprise entre 250 et 310°C dans un évaporateur à film mince.

4. Procédé selon l'une des revendications 1 à 3, caractérisé par le fait que le polyester de départ est un poly(adipate de diéthylèneglycol).

5. Procédé selon la revendication 4, caractérisé par le fait que le poly(adipate de diéthylèneglycol) contient un agent de ramification tel que le triméthylol propane, le glycérol ou le pentaérithritol.

6. Procédé selon l'une des revendications 1 à 5, caractérisé par le fait que le polyester est préparé par polycondensation en masse d'au moins un diol et d'au moins un acide à des températures comprises entre 160 et 250°C, en présence d'un catalyseur, de préférence sous un courant de gaz inerte.

7. Procédé selon l'une des revendications 1 à 6, caractérisé par le fait qu'après avoir subi la distillation, le polyester prétraité est rapidement refroidi à une température inférieure ou égale à 130°C.

8. Utilisation de la mousse susceptible d'être obtenue par le procédé de l'une des revendications 1 à 7 dans les moyens de transport.
